# FASCICULE DE BREVET EUROPEEN

(11) **EP 0 526 308 B1**
(45) Date de publication et mention de la délivrance du brevet: **23.08.1995**
(21) Numéro de dépôt: 92402115.7
(22) Date de dépôt: 22.07.1992
(51) Int. Cl.: H02B 13/035

(54) **Composant pour poste blindé pour le sectionnement et la mise à la terre**
Komponent für gekapselte Schaltanlage zum Trennen und zur Erdung
Metal clad switchgear component for disconnecting and grounding

(30) Priorité: 23.07.1991 FR 9109282
(43) Date de publication de la demande: 03.02.1993
(73) Titulaire: GEC ALSTHOM SA, 75116 Paris (FR)
(72) Inventeur: Marmonier, Jean, F-73100 Aix Les Bains (FR)
(74) Mandataire: Fournier, Michel

(56) Documents cités:
- DE-A- 3 035 870
- GB-A- 425 107
- GB-A- 2 053 571
- GB-A- 2 193 843

## Description

La présente invention concerne les installations électriques à enveloppe métallique à la terre, connues également sous les termes d'installation de type blindé.

Plus précisément, l'invention a trait aux fonctions "sectionneurs" et "mises à la terre associées"pour une installation comprenant deux départs.

Le schéma électrique d'un poste en H est représenté dans la figure 1. On y distingue, sur les arrivées A1 et A2, les disjoncteurs D1 et D2 qui peuvent être isolés par les sectionneurs S1 et S2, sur les départs De1 et De2 les disjoncteurs D3 et D4 qui peuvent être isolés par les sectionneurs S3 et S4, et, entre les deux branches, le disjoncteur D5 encadré par les sectionneurs S5 et S6. Dans la suite, nous ne considérerons que la moitié d'un tel poste, par exemple la partie P1 entourée par la ligne continue L, étant entendu que le reste du poste est parfaitement identique à une symétrie près.

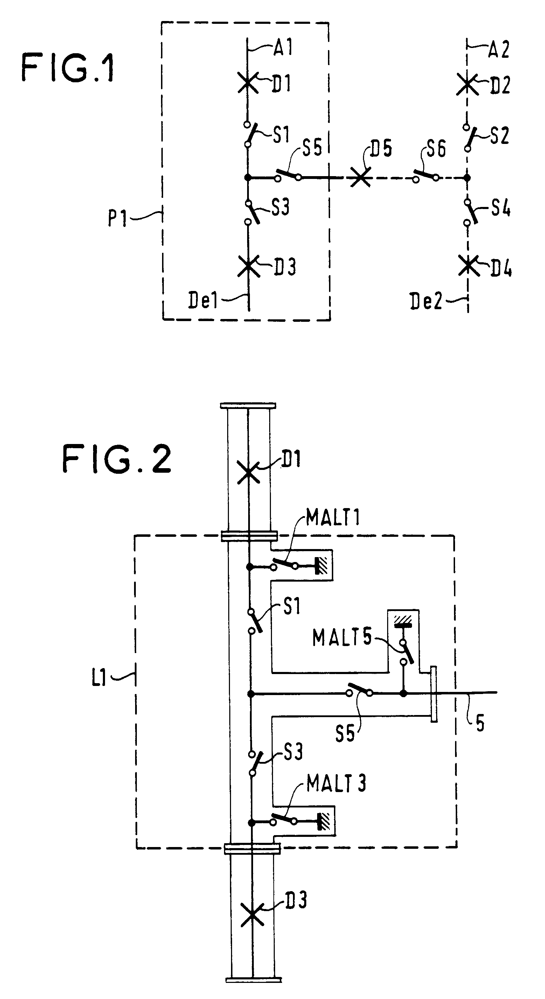

Selon la technique connue, le poste est réalisé au moyen de composants distincts assemblés bout à bout. La figure 2 montre le demi-poste P1, comprenant les divers composants constitutifs, qui ont reçu les mêmes références que dans la figure 1. On a désigné en outre par MALT1, MALT3 et MALT5 les dispositifs pour la mise à la terre en amont des sectionneurs S1, S3 et S5 respectivement. La référence 5 désigne le jeu de barres de départ.

Une telle technique comporte des inconvénients essentiellement relatifs au prix de réalisation. En effet, chaque élément doit être relié de manière étanche à son voisin, d'où une multiplicité des cônes supports de barre, des viroles de liaison, des boulons de fixation, etc.., ainsi qu'un temps de montage important. En outre chaque sectionneur doit comporter un organe de manoeuvre.

Un but de l'invention est de réaliser un poste permettant une grande économie dans la réalisation, tout en conservant une disponibilité de service identique.

Le document DE-A-30 35 870 décrit un sectionneur multiple à contacteur tournant selon l'art antérieur. Ce sectionneur ne comporte toutefois pas de contact de mise à la terre.

Un système selon l'invention est décrit dans la Revendication 1.

Le principe à la base de l'invention est de réduire les coûts de fabrication d'un poste par la réalisation d'un composant comprenant un équipage mobile unique pour les fonctions sectionneurs, S1, S3, S5 et pour les fonctions mise à la terre MALT 1, MALT3 et MALT5 (zone entourée par la ligne L1 dans la figure 2).

La continuité de service en cas de défaillance de ce composant est identique à celle obtenue avec les équipements de type connu ayant une commande individuelle par composant.

En effet, une intervention sur un sectionneur de jeu de barres d'un poste sous enveloppe métallique conventionnel nécessite la mise hors tension du jeu de barres. L'économie réalisée en mettant en commun sur un seul équipage mobile les six fonctions énumérées ci-dessus ne se fait donc pas au détriment de l'exploitation. En d'autres termes, la continuité du service en cas de défaillance du composant de l'invention demeure inchangée. Au contraire, la continuité globale de service est améliorée du fait de la réduction du nombre de composants du poste et en particulier de celui des composants tournants (un seul au lieu de six).

L'invention sera bien comprise à la description de deux modes de réalisation de l'invention, en référence au dessin annexé dans lequel:
- la figure 1 est une vue schématique d'un poste en H,
- la figure 2 est un schéma montrant les composants constitutifs du poste de la figure 1,
- la figure 3 est une vue partielle d'un poste blindé dans lequel est inséré le composant selon l'invention,
- la figure 4 est une vue éclatée en perspective d'un composant selon un premier mode de réalisation de l'invention,
- les figures 5, 5A, 6, 6A, 7, 7A, 8, 8A, 9, 9A et 10, 10A montrent les diverses positions prises par le composant et les schémas électriques correspondants,
- la figure 11 est une vue partielle en élévation en coupe axiale d'un composant selon une variante de réalisation de l'invention,
- la figure 12 est une vue en coupe selon la ligne 12-12 de la figure 11.

Les figures 1 et 2 ont déjà été commentées.

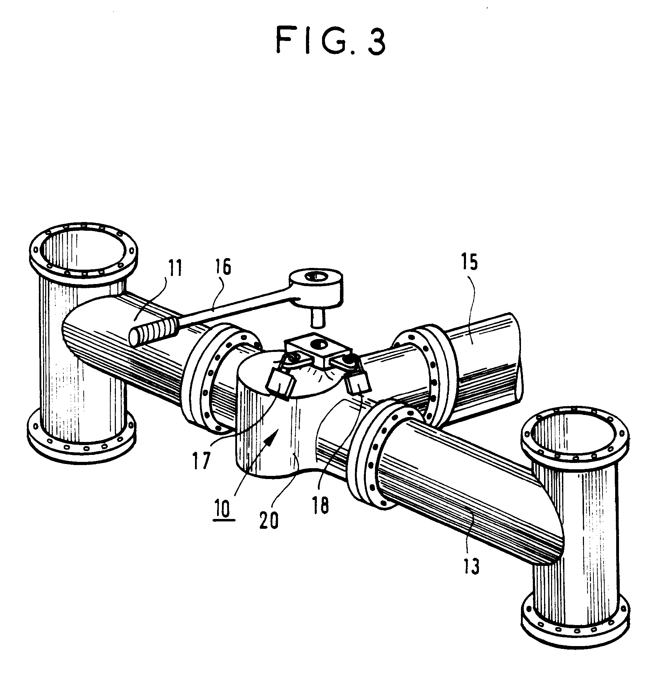

La figure 3 montre comment le composant de l'invention, désigné globalement par la référence 10, est inséré dans un poste où l'on distingue l'enveloppe 11 enfermant le disjoncteur D1, l'enveloppe 13 enfermant le disjoncteur D3 et, partiellement, l'enveloppe 15 enfermant le jeu de barres référencé 5. On aperçoit également dans la figure 3 le levier de manoeuvre 16 du composant 10, ainsi que les cadenas 17 et 18 interdisant respectivement l'ouverture des sectionneurs S1, S3 et S5, et la mise à la terre de ces sectionneurs. Toute autre arrangement de verrouillage est possible.

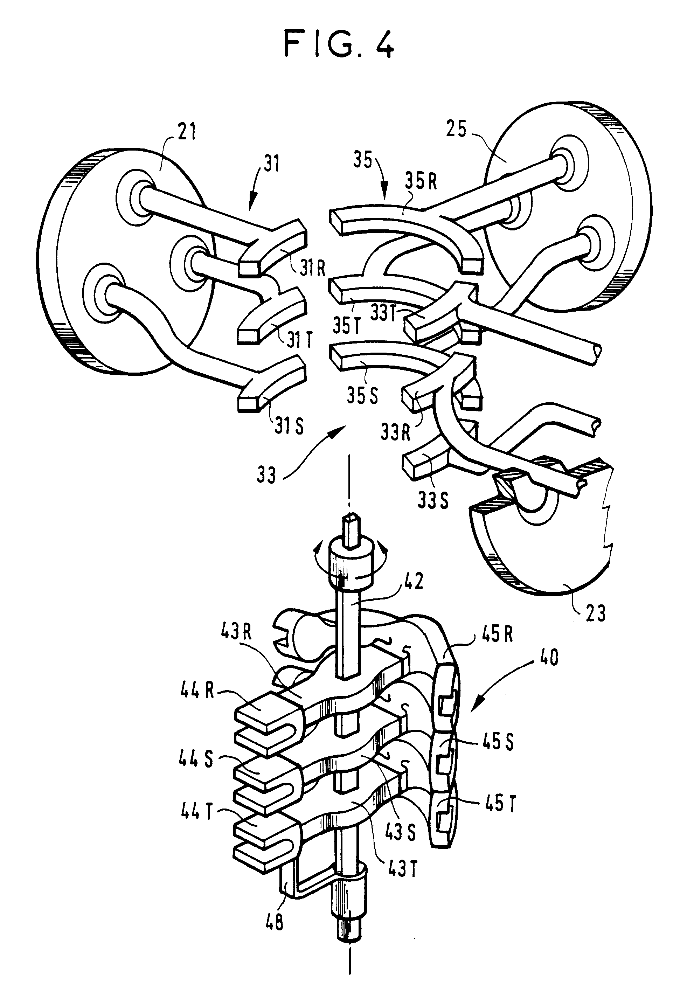

Le composant de l'invention est représenté, dans un premier mode de réalisation, en vue éclatée, dans la figure 4.

On n'a pas représenté l'enveloppe métallique visible dans la figure 3 où elle est référencée 20.

A l'intérieur de l'enveloppe, on trouve un ensemble fixe comprenant trois cônes isolants 21, 23 et 25, traversés par les conducteurs de phase désignés par les lettres R, S et T. Les cônes 21 et 23 sont disposés coaxialement et délimitent le composant du côté des disjoncteurs D1 et D3 respectivement; le cône 25 a un axe perpendiculaire à celui des cônes 21 et 25 et délimitent le composant du côté du disjoncteur D5.

Nous désigneront dans la suite par 31, 33 et 35 les groupes de barres triphasées, à l'intérieur du composant, portés respectivement par les cônes 21, 23 et 25 et correspondants aux deux départs et au jeu de barres.

Les barres du jeu 31 portent des contacts mâles 31R, 31S et 31T, en arc de cercle de longueur correspondant à environ 50 degrés d'arc (plus généralement de 45 à 60 degrés); de même, les barres du jeu 33 portent des contacts mâles 33R, 33S et 33T en arc de cercle de 50 degrés d'arc environ; les barres du jeu 35 portent des contacts 35R, 35S et 35T en arc de cercle de 100 degrés d'arc environ (plus généralement de 90 à 110 degrés); les contacts du jeu de barres 35 sont séparés des contacts des jeux 31 et 33 par une distance correspondant à environ 20 degrés d'arc (plus généralement de 15 à 30 degrés), ce qui est suffisant pour tenir la distance d'isolement.

Le composant comprend un équipage mobile désigné globalement par la référence 40; ce dernier comporte un arbre 42 traversant de manière étanche l'enveloppe 20 du composant et manoeuvré à l'extérieur du composant par le levier 16.

L'arbre 42 porte trois bras isolants parallèles 43R, 43S et 43 T; une extrémité d'un bras, par exemple le bras 43R, porte une mâchoire de contact 44R, conçue pour coopérer électriquement avec les contacts en arc de cercle 31R, 33R et 35R; l'autre extrémité du bras 43 R porte un contact constitué d'une mâchoire 45R en arc de cercle pouvant également coopérer avec les contacts mâles en arc de cercle précités.

La mâchoire 45R peut venir en contact avec les contacts mâles des trois groupes de barres 31, 33, 35 et, dans tous les cas, elle vient simultanément en contact avec deux de ces groupes. Pour cela, la mâchoire 45R a une forme d'arc de cercle de 140 degrés d'angle, plus généralement entre 125 et 155 degrés.

Les bras 43S et 43T sont équipés de mâchoires de contact identiques à celles du bras 43R désignées dans le dessins par les mêmes numéros affectés des lettres S et T respectivement.

Les mâchoires 44R, 44S et 44T sont réunies par un conducteur commun 48 relié à la terre.

Par rotation de l'arbre 42, on peut établir les diverses configurations électriques nécessaires lors du fonctionnement d'un poste ou lors de sa maintenance.

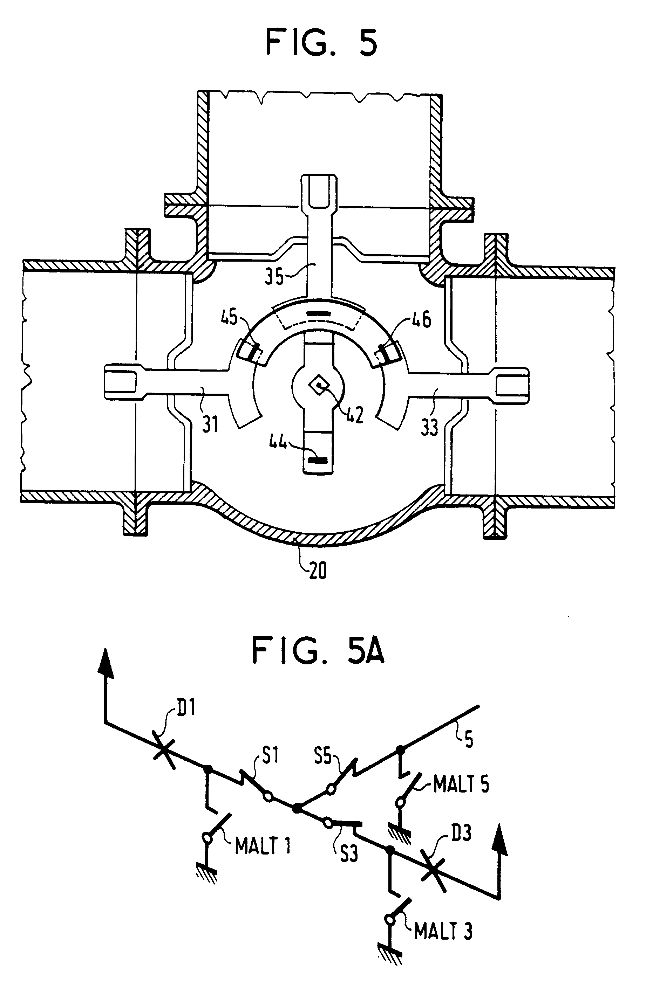

La figure 5 montre la position de l'arbre pour la configuration électrique de la figure 5A, à savoir sectionneurs S1, S3 et S5 fermés, MALT1, MALT3 et MALT5 ouverts.

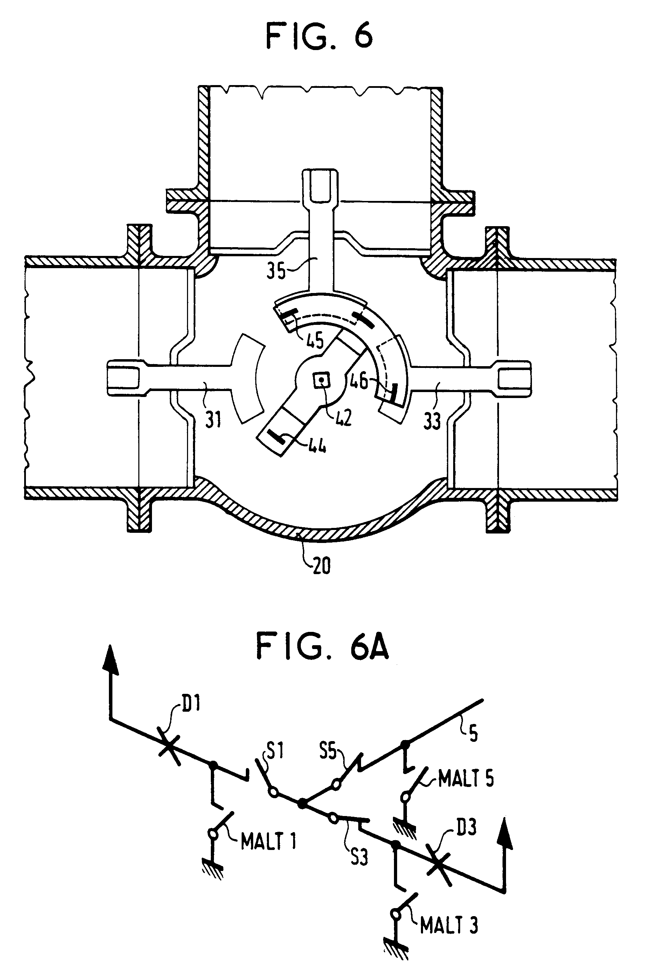

La figure 6 montre la position de l'arbre pour la configuration de la figure 6A dans laquelle le sectionneur S1 et toutes les mises à la terre sont ouvertes, les sectionneurs S3 et S5 étant fermés.

Cette position se déduit de la position de la figure 5 par une rotation de l'arbre de 30 degrés environ dans le sens des aiguilles d'une montre.

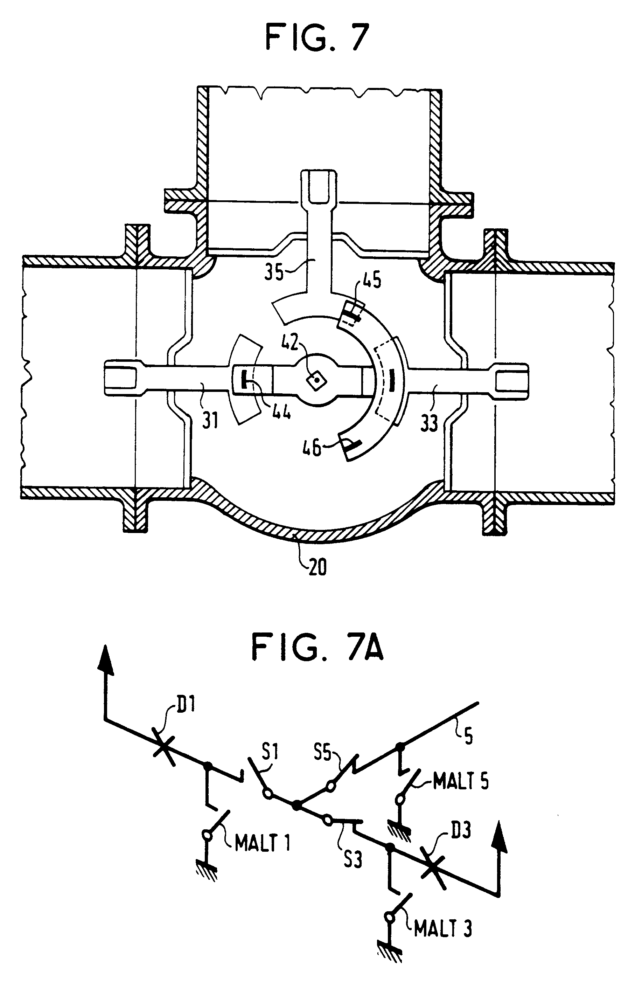

La figure 7 montre la position de l'arbre 42 pour la configuration de la figure 7A dans laquelle le sectionneur S1 est ouvert et la mise à la terre MALT1 effectuée, les sectionneurs S3 et S5 étant fermés et les mises à la terre MALT3 et MALT5 ouvertes. Cette configuration, qui se déduit de celle de la figure 6 par une rotation de 30 degrés environ dans le sens des aiguilles d'une montre, correspond à l'isolation et la mise à la terre complète du départ du côté du disjoncteur D1, pour sa maintenance.

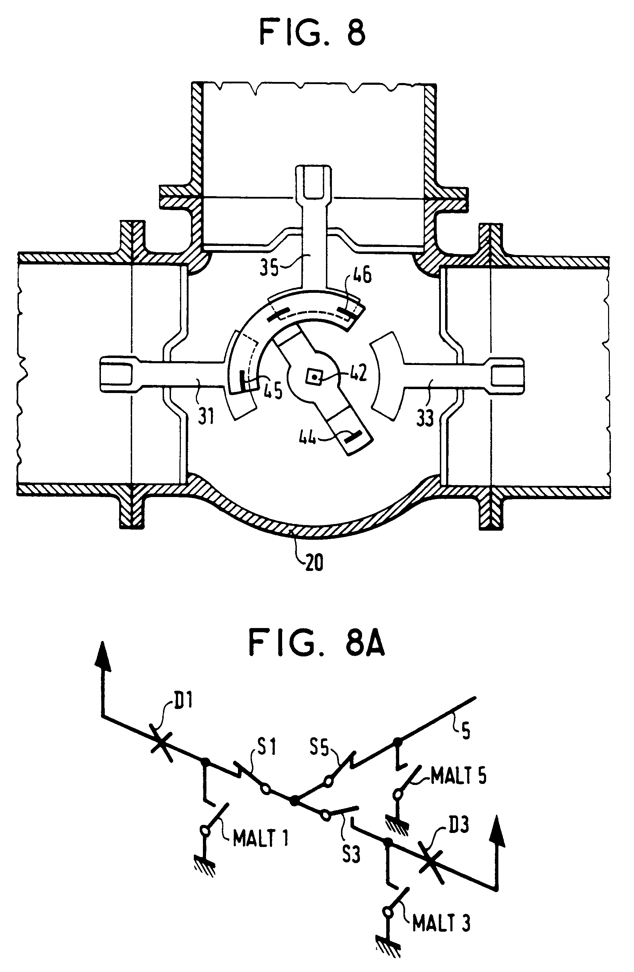

La figure 8 montre la position de l'arbre 42 pour la configuration électrique de la figure 8A, à savoir départ côté disjoncteur D3 isolé et mises à la terre ouvertes. C'est la position symétrique de celle de la figure 6, la symétrie se faisant par rapport au jeu de barres 35.

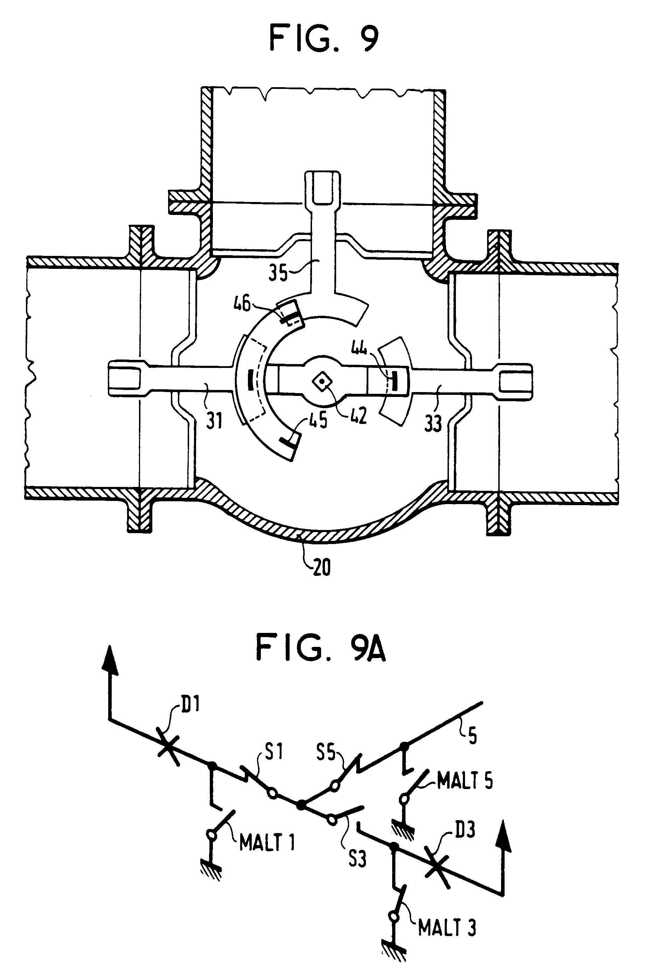

La figure 9 montre la position de l'arbre 42 dans la configuration électrique de la figure 8A, à savoir départ côté disjoncteur D3 isolé et mis à la terre; cette configuration est symétrique de celle de la figure 7.

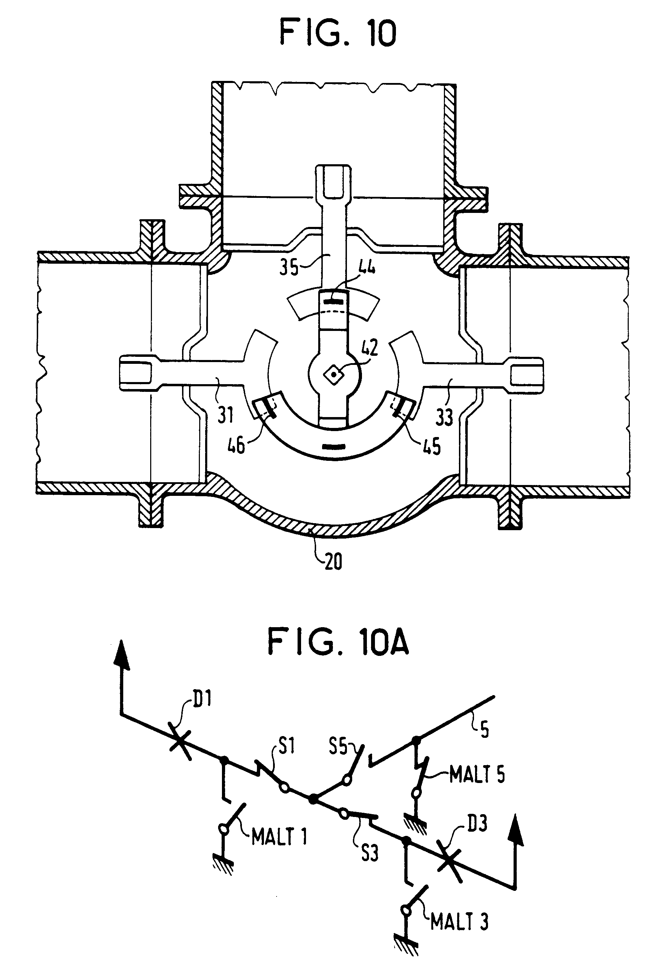

La figure 10 montre la position de l'arbre 42 pour la configuration électrique de la figure 10A, correspondant à une mise à la terre du jeu de barres 5, l'isolant du reste du circuit. Cette position se déduit de celle de la figure 5 par une rotation de l'arbre 42 de 180 degrés.

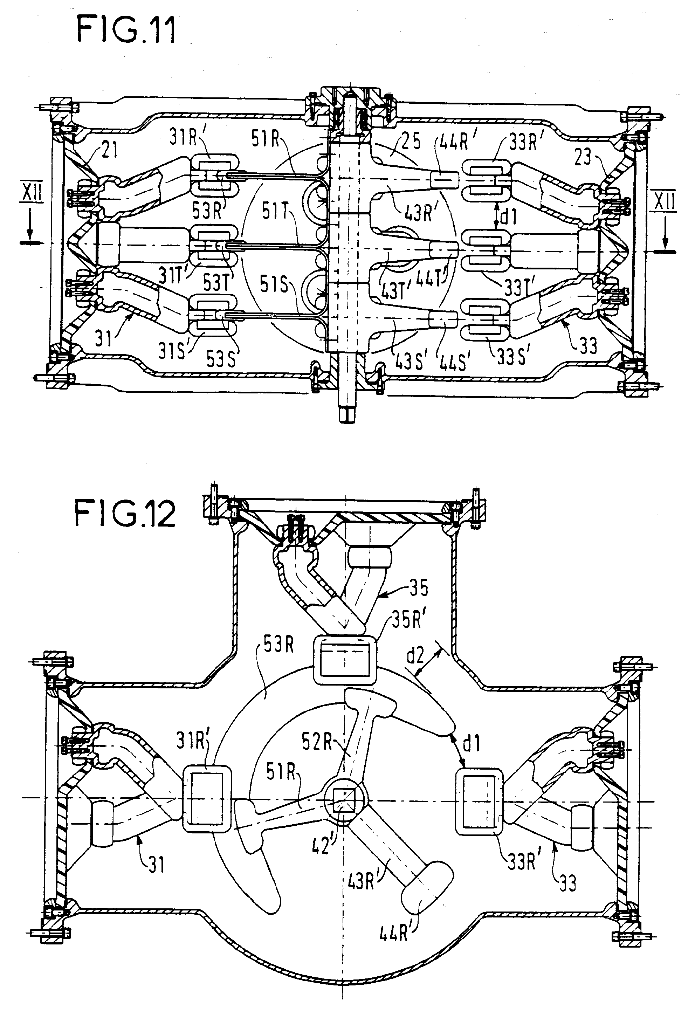

Les figures 11 et 12 illustrent un second mode de réalisation de l'invention dans lequel les mâchoires sont fixes et les contacts mâles mobiles. Cette variante permet de réduire le nombre des contacts à 3 et d'alléger le poids de l'équipage mobile et, par suite, de réduire le coût de l'appareil.

Dans les figures 11 et 12, les éléments communs à ces figures et à la figure 4 ont reçu les mêmes numéros de référence.

Les extrémités des barres des jeux 31, 33 et 35 sont munies de mâchoires 31R′, 31S′, 31T′ pour le jeu 31; 33R′, 33S′ et 33T′ pour le jeu 33; 35R′, 35S′ et 35T′ pour le jeu 35, dans lequel seule la mâchoire 35R′ est visible dans la figure 12.

Les mâchoires occupent un espace angulaire voisin de 20 à 25 degrés.

L'arbre 42′ de l'équipage mobile porte des bras 43R′, 43S′ et 43T′, à l'extrémité desquels sont fixées des pièces de contact 44R′, 44S′ et 44T′, reliées entre elles électriquement par une connexion non représentée dans le dessin et reliées à la terre.

L'arbre 42′ porte également des bras 51R, 51S, 51T et 52R, 52S et 52T portant des pièces de contact 53R, 53S et 53T. Ces pièces de contact sont de forme circulaire et s'étendent sur un angle d'environ 210 degrés, plus généralement entre 190 et 220 degrés.

Les dimensions des pièces sont choisies pour respecter les distances d'isolement entre pôles (d1) et entre pôle et terre (d2).

On peut réaliser avec le composant des figures 11 et 12, les mêmes configurations que celles qui ont été décrites plus haut en référence aux figures 5 à 10 (six positions).

Le composant de l'invention permet de réaliser une économie pouvant atteindre près de 70% par rapport aux dispositifs de l'art antérieur.

L'invention peut s'appliquer à des installations blindées comportant une enveloppe métallique à la terre pour chaque phase.

## Revendications

1. Composant pour poste blindé destiné à réaliser l'équivalent de trois sectionneurs triphasés disposés respectivement sur deux départs alimentant un même jeu de barres triphasé avec possibilité de mise à la terre des sectionneurs en amont de ceux-ci, caractérisé en ce qu'il comprend une enveloppe étanche remplie de gaz à bonnes propriétés diélectriques , ladite enveloppe (20) comportant une première et une seconde ouvertures fermées respectivement par un premier (21) et un second (23) cônes coaxiaux en matériau isolant, ladite enveloppe comportant une troisième ouverture fermée par un troisième cône 25 en matériau isolant, d'axe perpendiculaire à celui desdits premier et second cônes, lesdits cônes étant traversés par des jeux de barres triphasés (31, 33, 35) terminées à l'intérieur de l'enveloppe par des premières pièces de contact (31R, 31S, 31T; 33R, 33S, 33T; 35R, 35S, 35T; 31R′, 31S′, 31T′, 33R′, 33S′, 33T′, 35R′, 35S′, 35T′), ledit composant comportant en outre un arbre (42, 42′) disposé à l'intérieur de l'enveloppe (20), la traversant de manière étanche et muni d'un organe de manoeuvre ((16), ledit arbre portant un premier jeu de trois bras (43R, 43S, 43T; 43R′, 43S′, 43T′) portant des secondes pièces de contact (44R, 44S, 44T; 44R′, 44S′, 44T′) reliées électriquement entre elles et à la terre, lesdites secondes pièces de contact pouvant coopérer avec lesdites premières pièces de contact lorsque ledit arbre pivote, ledit arbre portant en outre au moins un second jeu de bras (43R, 43S, 43T; 51R, 51S, 51T, 52R, 52S, 52T) portant des troisièmes pièces de contact (43R, 43S, 43T, 46R, 45S, 46S, 45T, 46T; 53R, 53S, 53T) pouvant coopérer avec lesdites premières pièces de contact lorsque ledit arbre pivote, lesdites secondes pièces de contact ne pouvant venir en contact à la fois qu'avec les premières pièces de contact d'un seul jeu de barres, lesdites troisièmes pièces de contact pouvant venir en contact à la fois avec les premières pièces de contact des trois jeux de barres et venant toujours en contact avec les premières pièces de deux jeux de barres.

2. Composant selon la revendication 1, caractérisé en ce que les premières pièces de contact (31R, 31S, 31T; 33R, 33S, 33T; 35S, 35T, 35T) sont des pièces circulaires en forme d'arc de cercle.

3. Composant selon la revendication 2, caractérisé en ce que les premières pièces de contact (31R, 31S, 31T; 33R, 33S, 33T) relatives aux jeux de barres (31, 33) desdits départs ont un angle compris entre 45 et 60 degrés, lesdites premières pièces de contact (35R, 35S, 35T) relatives au jeu de barre (35) dudit départ ont un angle compris entre 90 et 110 degrés, les intervalles entre les premières pièces de contact des départs et celles du jeu de barre étant compris entre 15 et 30 degrés d'angle.

4. Composant selon la revendication 1, caractérisé en ce que les secondes (44R, 44S,44T) et troisièmes (45R, 45S, 45T) pièces de contact sont des mâchoires, les troisièmes pièces étant en arc de cercle d'angle compris entre 125 et 155 degrés.

5. Composant selon la revendication 1, caractérisé en ce que les premières pièces de contact (31R′, 31S′, 31T′; 33r′, 33S′, 33T′; 35R′, 35S′, 35T′) sont des mâchoires, les secondes ( 44R′, 44S′, 44T′) et troisièmes (53R, 53S, 53T) pièces de contact étant des conducteurs plats coopérant avec lesdites mâchoires, les troisièmes pièces de contact ayant une forme d'arc de cercle compris entre 190 et 220 degrés.

## Patentansprüche

1. Bauteil für eine abgeschirmte Station, das die Funktion von drei dreiphasigen Trennschaltern, die in zwei Abgängen und einem Zugang eines dreiphasigen Stromschienensystems liegen sowie möglicherweise die Erdung der Trennschalter vor diesen realisieren soll, dadurch gekennzeichnet, daß es eine mit einem Gas guter dielektrischer Eigenschaften gefüllte dichte Hülle (20) enthält, die eine erste und eine zweite durch zwei zueinander koaxialen Isolierscheiben (21, 23) verschlossene Öffnungen sowie eine dritte Öffnung besitzt, die durch eine dritte Isolierscheibe (25) mit einer Achse senkrecht zu der der beiden ersten Isolierscheiben verschlossen ist, daß die Isolierscheiben je von dreiphasigen Stromschienensätzen (31, 33, 35) durchquert werden, die im Inneren der Hülle in ersten Kontaktstücken (31R, 31S, 31T; 33R, 33S, 33T; 35R, 35S, 35T; 31R′, 31S′, 31T′; 33R′, 33S′, 33T′; 35R′, 35S′, 35T′) enden, daß das Bauteil weiter in der Hülle (20) eine Welle (42, 42′) aufweist, die dicht die Hülle durchquert und ein Betätigungsorgan (16) trägt, daß die Welle einen ersten Satz von drei Armen (43R, 43S, 43T; 43R′, 43S′, 43T′) trägt, die zweite Kontaktstücke (44R, 44S, 44T; 44R′, 44S′, 44T′) aufweisen, wobei diese Kontaktstücke elektrisch miteinander und mit Erde verbunden sind, daß die zweiten Kontaktstücke mit den ersten Kontaktstücken bei einer Drehung der Welle zusammenwirken können, daß die Welle außerdem mindestens einen zweiten Satz von Armen (43R, 43S, 43T; 51R, 51S, 51T; 52R, 52S, 52T) trägt, der dritte Kontaktstücke (45R, 45S, 45T; 46R, 46S, 46T; 53R, 53S, 53T) aufweist, die mit den ersten Kontaktstücken bei einer Drehung der Welle zusammenwirken können, daß die zweiten Kontaktstücke gleichzeitig nur mit jeweils einem der ersten Kontaktstücke eines Schienensatzes in Kontakt gelangen können, während die dritten Kontaktstücke auf einmal mit den ersten Kontaktstücken der drei Schienensätze in Kontakt gelangen können und stets mit den ersten Kontaktstücken von zwei Schienensätzen in Kontakt stehen.

2. Bauteil nach Anspruch 1, dadurch gekennzeichnet, daß die ersten Kontaktstücke (31R, 31S, 31T; 33R, 33S, 33T; 35R, 35S, 35T) die Form von Kreisbogen haben.

3. Bauteil nach Anspruch 2, dadurch gekennzeichnet, daß die ersten Kontaktstücke (31R, 31S, 31T; 33R, 33S, 33T) bezüglich der Abgangs-Schienensätze (31, 33) einen Winkel zwischen 45 und 60° einschließen, daß die ersten Kontaktstücke (35R, 35S, 35T) bezüglich des Abgangs-Schienensatzes (35) einen Winkel zwischen 90 und 110° einschließen und daß die Abstände zwischen den ersten Kontaktstücken der Abgangs-Schienensätze und denen des Zugangs-Schienensatzes zwischen 15 und 30 Winkelgrad betragen.

4. Bauteil nach Anspruch 1, dadurch gekennzeichnet, daß die zweiten und dritten Kontaktstücke (44R, 44S, 44T; 45R, 45S, 45T) Gabeln sind und daß die dritten Kontaktstücke einen Winkel zwischen 125 und 155° einschließen.

5. Bauteil nach Anspruch 1, dadurch gekennzeichnet, daß die ersten Kontaktstücke (31R′, 31S′, 31T′; 33R′, 33S′, 33T′; 35R′, 35S′, 35T′) Gabeln sind, daß die zweiten und dritten Kontaktstücke (44R′, 44S′, 44T′; 53R, 53S, 53T) flache Leiter sind, die mit den Gabeln zusammenwirken, und daß die dritten Kontaktstücke die Form eines Kreisbogens mit einem Winkel zwischen 190 und 220° besitzen.

## Claims

1. A component for a metal-clad station, said component being designed to provide the equivalent of three three-phase section switches respectively disposed on two outlets powering the same set of three-phase busbars, with it being possible to ground the section switches upstream therefrom, said component being characterized in that it includes gastight cladding filled with a gas having good dielectric properties, said cladding (20) including a first opening and a second opening respectively closed off by means of first and second inserts (21 & 23) made of an insulating material and disposed in alignment with each other, said cladding including a third opening closed off by means of a third insert (25) made of an insulating material and having its axis perpendicular to the axis of the first and second inserts, with sets of three-phase busbars (31, 33, 35) passing through said inserts and being terminated inside the cladding by first contact parts (31R, 31S, 31T; 33R, 33S, 33T; 35R, 35S, 35T; 31R′, 31S′, 31T′; 33R′, 33S′, 33T′; 35R′, 35S′, 35T′), said component further including a shaft (42, 42′) disposed inside the cladding (20), passing therethrough in gastight manner, and equipped with a drive member (16), said shaft carrying a first set of three arms (43R, 43S, 43T; 43R′, 43S′, 43T′) carrying second contact parts (44R, 44S, 44T, 44R′, 44S′, 44T′) electrically connected together and to ground, said second contact parts being capable of cooperating with said first parts when said shaft turns, said shaft further carrying at least one second set of arms (43R, 43S, 43T; 51R, 51S, 51T, 52R, 52S, 52T) carrying third contact parts (43R, 43S, 43T, 46R, 45S, 46S, 45T, 46T; 53R, 53S, 53T) capable of cooperating with said first contact parts when said shaft turns, said second contact parts being capable of coming into contact at any one time with the first contact parts of one set of busbars only, said third contact parts being capable of coming into contact at any one time with the first contact parts of all three sets of busbars, and always in contact with the first parts of two sets of busbars.

2. A component according to claim 1, characterized in that the first contact parts (31R, 31S, 31T; 33R, 33S, 33T; 35R, 35S, 35T) are circular parts in the form of circular arcs.

3. A component according to claim 2, characterized in that the first contact parts (31R, 31S, 31T; 33R, 33S, 33T) corresponding to the sets of busbars (31, 33) of said two outlets extend over an angle lying in the range 45 degrees to 60 degrees, said first contact parts (35R, 35S, 35T) corresponding to the other set of busbars (35) extending over an angle lying in the range 90 degrees to 110 degrees, the gaps between the first contact parts of the outlets and the first contact parts of the set of busbars extending over an angle lying in the range 15 degrees to 30 degrees.

4. A component according to claim 1, characterized in that the second contact parts (44R, 44S, 44T) and the third contact parts (45R, 45S, 45T) are jaws, the third parts being in the form of circular arcs extending over an angle lying in the range 125 degrees to 155 degrees.

5. A component according to claim 1, characterized in that the first contact parts (31R′, 31S′, 31T′, 33R′, 33S′, 33T′; 35R′, 35S′, 35T′) are jaws, the second contact parts (44R′, 44S′, 44T′) and the third contact parts (53R, 53S, 53T) being flat conductors cooperating with said jaws, said third contact parts being in the form of circular arcs extending over an angle lying in the range 190 degrees to 220 degrees.
